# FASCICULE DE BREVET EUROPEEN

(11) **EP 1 279 484 B1**
(45) Date de publication et mention de la délivrance du brevet: **29.10.2008**
(21) Numéro de dépôt: 02015986.9
(22) Date de dépôt: 18.07.2002
(51) Int. Cl.: B29D 30/16

(54) **Appareil et procédé de fabrication d'un renforcement pour pnumatique**
Verfahren und Vorrichtung zur Herstellung einer Reifenverstärkungsstruktur
Method and Apparatus for the manufacture of a reinforcing structure for a tyre

(30) Priorité: 26.07.2001 FR 0110052
(43) Date de publication de la demande: 29.01.2003
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: Mayet, Jean-Claude, 63000 Clermont-Ferrand (FR)
(74) Mandataire: Bauvir, Jacques

(56) Documents cités:
- EP-A- 0 580 055
- EP-A- 0 962 304
- DE-C- 199 424

## Description

La présente invention concerne la fabrication des pneumatiques. Plus précisément, elle se rapporte à la mise en place de fils, pour constituer un renforcement du pneumatique. Plus particulièrement, elle propose des moyens aptes à fabriquer un tel renforcement sur une forme proche ou identique de la forme de la cavité interne du pneumatique, c'est à dire une forme sensiblement toroïdale, supportant l'ébauche d'un pneumatique pendant sa fabrication.

Dans ce domaine technique, on connaît déjà des procédés et appareils qui permettent d'intégrer la fabrication des renforcements de pneumatique à l'assemblage du pneumatique lui-même. Cela signifie que, plutôt que de recourir à des produits semi-finis, comme des nappes de renforcement, on réalise un ou des renforcements in situ, au moment où l'on fabrique le pneumatique, et à partir d'une seule bobine de fil. Parmi ces procédés et appareils, la solution décrite dans la demande de brevet EP 0 580 055 est tout particulièrement adaptée pour la réalisation de renforcements de carcasse sur un noyau rigide dont la surface extérieure correspond sensiblement à la forme de la cavité interne du pneumatique final. Dans cette demande de brevet EP 0 580 055, on voit un appareillage dans lequel le fil, destiné à constituer un renforcement de carcasse, est posé en arceaux contigus sur un noyau rigide, par un système d'animation comportant un oeilleton fixé sur une chaîne montée sur des poulies de façon à entourer le noyau en formant une sorte de « C ». Grâce à ce système d'animation, l'oeilleton effectue un mouvement de va-et-vient autour du noyau de façon à poser, progressivement et de façon contiguë, un arceau à chaque aller et un arceau à chaque retour. Grâce à l'intervention de presseurs appropriés, les extrémités desdits arceaux sont appliquées au fur et à mesure sur le noyau rigide, pré-revêtu de caoutchouc cru.

Afin que les arceaux soient posés aussi radialement que possible dans les flancs, tout en conférant au noyau rigide un mouvement de rotation non saccadé, il est proposé que les poulies supportant la chaîne soient décalées circonférentiellement par rapport à un plan radial de référence. Cependant, un tel décalage ne peut assurer une dépose radiale que pour une seule combinaison des vitesses du noyau et de la chaîne, c'est à dire pour un seul nombre d'arceaux radiaux déposés sur toute la périphérie du pneumatique. Dès que l'on s'écarte de cette configuration standard, la correction de trajectoire n'est qu'imparfaite. Il faut alors soit s'en accommoder soit procéder à un réglage de la position des poulies.

Par la demande de brevet EP 0 962 304, on connaît un appareil prévu lui aussi pour la réalisation de renforcements de carcasse sur un noyau rigide dont la surface extérieure correspond sensiblement à la forme de la cavité interne du pneumatique final. Le système d'animation comporte un bras oscillant autour d'un axe de rotation sensiblement centré sur la section radiale du tore formé par le noyau, le fil débouchant à l'extrémité de celui-ci pour être posé en arceaux contigus sur un noyau rigide. Pour maîtriser la trajectoire de dépose des arceaux dans les flancs, la demande de brevet EP 0 962 304 propose de faire passer le fil entre deux guide-fil situés en regard des flancs. La demande de brevet EP 0 962 304 propose également de conférer au noyau un mouvement de rotation saccadé. Compte tenu de l'inertie du noyau, cela n'est pas sans poser des difficultés pratiques, d'autant plus aiguës que l'on souhaite fonctionner à des cadences de pose rapides.

L'objectif de la présente invention est de proposer un dispositif capable de fonctionner selon le procédé général décrit dans la demande de brevet EP 0 580 055 précitée, ne compromettant pas le fonctionnement des organes de dépose du fil à des cadences importantes, tout en maîtrisant la précision de dépose du fil sur la forme. L'objectif de l'invention est d'obtenir un bon contrôle de la trajectoire de pose du fil sur la forme servant de support de fabrication pour un pneumatique par une déviation appropriée du fil, sans devoir agir dans ce but sur les mouvements du système d'animation des organes de dépose et sur les mouvements de la forme.

L'invention propose un appareil de fabrication d'un renforcement pour pneumatique, ledit appareil étant destiné à fabriquer un renforcement constitué à partir d'un fil délivré en continu et à la demande par un distributeur approprié, ledit appareil étant destiné à être utilisé en coopération avec une forme de révolution sur laquelle on construit progressivement ledit renforcement en déposant des tronçons dudit fil selon une trajectoire souhaitée pour ledit fil à la surface de ladite forme, ledit appareil comprenant :
- un organe de dépose du fil sur la surface de la forme, décrivant un trajet alterné entre deux points d'inversion de mouvement,
- des presseurs proches de chaque point d'inversion de mouvement, pour appliquer le fil sur la forme auxdites extrémités, agissant en synchronisme avec ledit organe de dépose ,
caractérisé en ce qu'il comporte
- au moins un guide mobile, disposé en regard de ladite forme, dans l'espace situé entre ladite forme et le trajet décrit par ledit organe de dépose,
- des moyens de commande pour déplacer circonférentiellement ledit guide mobile,
- des moyens de motorisation pour piloter en synchronisme l'organe de dépose, les presseurs et les moyens de commande du guide mobile.

Le lecteur est invité à consulter la demande de brevet EP 0 580 055 précitée car la présente invention propose un complément au procédé qui y est décrit. La présente invention propose un dispositif pouvant être utilisé avec le système d'animation qui y est décrit, ou avec des systèmes d'animation comme celui de la demande de brevet EP 0 962 304, celui de demande de brevet EP 1122057, celui de demande de brevet EP 1122055, celui de demande de brevet FR 02/01747, ou encore celui de demande de brevet FR 02/01748, la liste n'étant bien sûr pas limitative. C'est pourquoi, de façon générique, aux différentes figures jointes au présent mémoire, on représente par un cercle l'orifice de sortie du fil ou l'oeilleton dans lequel le fil est enfilé, sans revenir sur l'animation dudit orifice ou oeilleton, qui ne fait pas partie en soi de la présente invention. On désignera cet oeilleton ou cet orifice de sortie ou tout organe équivalent par « organe de dépose », celui-ci étant mis en mouvement par un système d'animation lui faisant décrire un « trajet » survolant et contournant plus ou moins la forme de fabrication du pneumatique.

Avant d'aborder en détails la description de ces nouveaux moyens de l'invention, rappelons que, comme dans la demande de brevet EP 0 580 055 précitée, le terme "fil" doit bien entendu être compris dans un sens tout à fait général, englobant un monofilament, un multifilament, un assemblage comme par exemple un câble ou un retors, et ceci quelle que soit la nature du matériau, et que le "fil" soit pré revêtu de caoutchouc ou non. Dans le présent mémoire, on emploie le terme "tronçon" pour désigner une partie du fil allant d'un point à un autre dans l'armature de renforcement. On emploie le terme « trajectoire » pour désigner le chemin que forme le fil après avoir été déposé sur la forme. L'ensemble de ces tronçons disposés sur tout le tour de la forme constituera le renforcement proprement dit. Dans un cas particulier où l'on fabriquerait une carcasse, par exemple radiale, un tel tronçon peut être un arceau allant d'un bourrelet à l'autre bourrelet. Plus généralement, un tronçon au sens défini ici peut faire partie de n'importe quel renforcement, par exemple un renforcement de sommet. Ces tronçons ou arceaux peuvent être individualisés par une coupe du fil en cours de pose, ou tous reliés entre eux dans le renforcement final, par exemple par des boucles.

Fondamentalement, l'invention traite de la dépose en continu d'un fil, dans une configuration aussi proche que possible de la configuration dans le produit final. Le fil étant délivré à la demande par un distributeur approprié comportant par exemple une bobine de fil et le cas échéant un dispositif de contrôle de la tension du fil extrait de la bobine, l'appareil de fabrication d'un renfort à partir d'un seul fil coopère avec une forme (noyau rigide ou une membrane) sur laquelle on fabrique le pneumatique. Il importe peu que le renforcement soit, pour être complet, fabriqué en plusieurs rotation successives de la forme, avec coupe du fil ou non entre deux rotations successives.

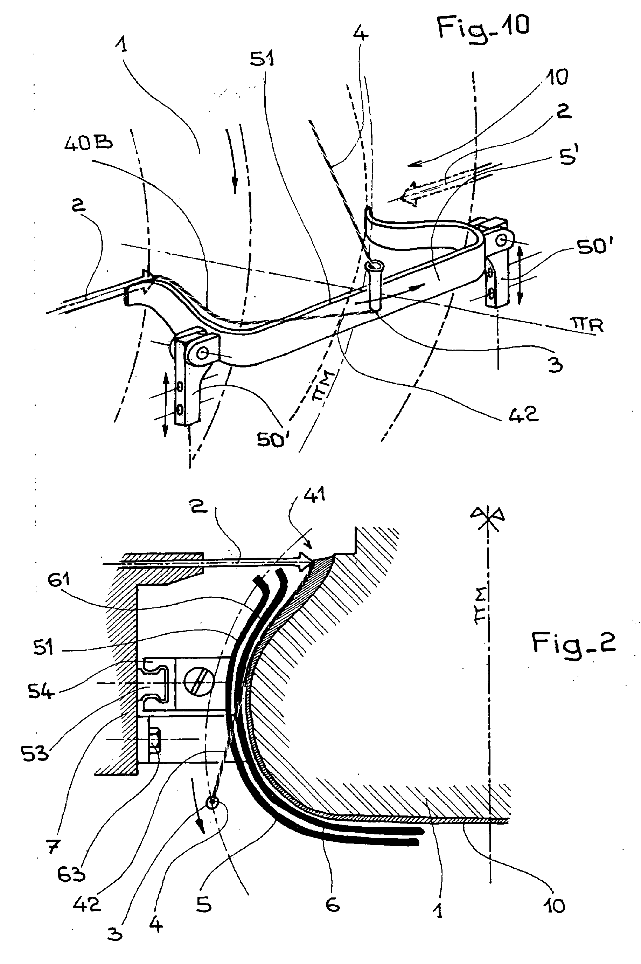

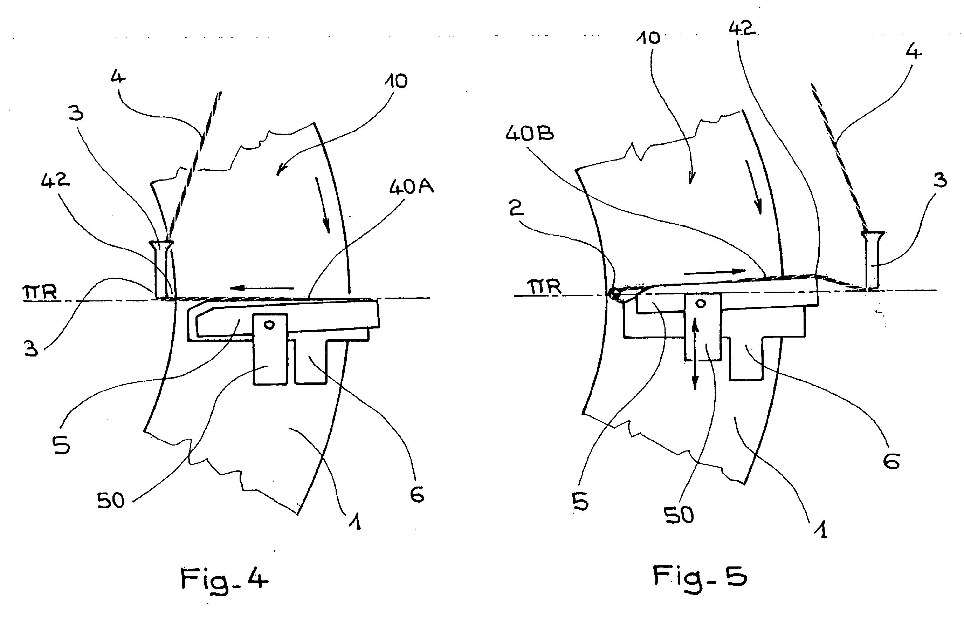

Lorsque l'on définit des positions, des directions ou des sens avec les mots "radialement, axialement, circonférentiellement", ou lorsque l'on parle de rayons, on prend pour repère la forme sur laquelle on fabrique le pneumatique, ou le pneumatique par lui-même. L'axe géométrique de référence est l'axe de rotation de la forme. Le plan médian π_{M} est un plan perpendiculaire à l'axe de rotation de la forme, visible par exemple à la figure 2. Le plan médian π_{R} est le plan contenant l'axe de rotation de la forme, visible par exemple à la figure 5. On emploie le terme « portion » pour désigner le chemin du fil entre l'endroit où il est lâché par l'organe de dépose et l'endroit où il rejoint la surface de la forme.

La suite de la description permet de bien faire comprendre tous les aspects de l'invention, en s'appuyant sur les figures suivantes :
La figure 1 est une perspective montrant l'organe de guidage selon l'invention ;
La figure 2 est une coupe radiale partielle de la forme, avec vue sur l'organe de guidage selon l'invention ;
Les figures 3a à 3e montrent partiellement, en vue de coté de la forme, l'intervention d'un élément de l'organe de guidage selon l'invention pendant le mouvement de l'organe de dépose du fil depuis la zone correspondant à un bourrelet vers la zone correspondant à la bande de roulement ;
La figure 4 est une vue de coté de la forme, montrant la configuration de l'organe de guidage selon l'invention pendant le mouvement d'avance de l'organe de dépose du fil vers la zone correspondant au bourrelet ;
La figure 5 est une vue de coté de la forme, montrant la configuration de l'organe de guidage selon l'invention pendant le mouvement de retour de l'organe de dépose du fil vers la zone correspondant à la bande de roulement ;
La figure 6 illustre un détail de la commande de l'organe de guidage selon l'invention ;
La figure 7 illustre schématiquement le résultat obtenu par l'invention ;
La figure 8 illustre schématiquement le résultat obtenu avec les mêmes moyens de dépose du fil, mais sans l'utilisation de l'organe de guidage selon l'invention ;
La figure 9 est une coupe radiale de la forme, montrant l'intervention de l'organe de guidage selon l'invention, des deux côtés (axialement) de la forme ;
La figure 10 est une perspective montrant une variante de réalisation de l'organe de guidage selon l'invention.

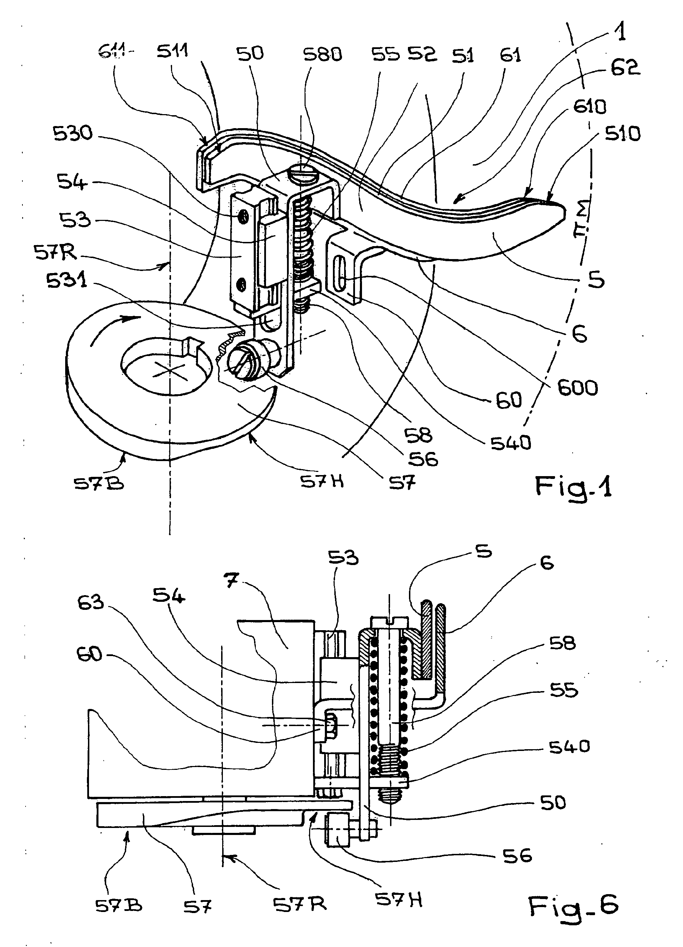

A la figure 1, on aperçoit en arrière plan une forme 1 destiné à définir la forme de la cavité interne d'un pneumatique. La forme 1 est supposée être un noyau rigide et démontable, sans toutefois que ceci soit limitatif. La forme est revêtue de caoutchouc 10, par exemple d'une couche de gomme d'étanchéité à base de caoutchouc butyl, ainsi que, en général, d'une couche d'un caoutchouc plus adapté à enrober le fil d'un renforcement destiné à réaliser la carcasse d'un pneumatique, comme on le voit en particulier à la figure 2. Le caoutchouc 10 recouvrant la forme 1 permet de retenir des arceaux 40 de fil 4 sur la forme 1 au fur et à mesure de sa dépose, par collage. Bien entendu, la forme 1 est entraînée en rotation par tout dispositif convenable, non représenté.

Les organes de pose proprement dits du fil 4 comportent notamment un système d'animation (non représenté) d'un organe de dépose 3 (visible aux figures 2, 3, 4, 5, 9 et 10) d'un fil 4 de renforcement et des dispositifs presseurs 2 (schématisés aux figures 2, 3a à 3e, 5, 9 et 10) de part et d'autre de la forme 1.

On a déjà expliqué que l'organe de dépose 3 peut être par exemple un oeilleton ou l'orifice d'un bras oscillant, comme évoqué dans le préambule de la présente demande de brevet. Un système approprié pour l'animation de l'organe de dépose 3 est par exemple un système à chaîne comme décrit dans la demande de brevet EP 0 580 055, ou encore un système à bras oscillants comme décrit dans d'autres demandes de brevet citées, les deux faisant décrire à l'organe de dépose 3 un mouvement survolant et contournant la forme 1. Ledit système approprié fait ici parcourir à l'organe de dépose 3 un mouvement dans un plan, le « plan de mouvement ». Il convient de soigner la réalisation de l'organe de dépose 3 pour ne pas blesser le fil 4.

Quant aux dispositifs presseurs 2, ils doivent être positionnés de façon appropriée pour jouer le rôle décrit dans la demande de brevet EP 0 580 055 précitée. Rappelons qu'ils peuvent comporter tous les deux une fourche et un marteau, mobiles entre une position reculée (position éloignée de la forme 1), et une position avancée (position en contact avec la forme 1). Ils permettent la formation d'une boucle et la dépose de celle-ci contre la forme 1.

Revenons à la figure 1 pour débuter la description de l'organe de guidage selon l'invention. Pour plus de clarté, à la figure 1, on n'a représenté ni l'organe de dépose du fil sur la forme, ni les presseurs destinés à agir dans les zones correspondant au futur bourrelet du pneumatique. L'organe de guidage comporte un guide mobile 5. L'organe de guidage comporte aussi une option intéressante : il s'agit d'un guide fixe 6. Soulignons qu'il n'est pas indispensable, mais seulement avantageux, d'utiliser un guide fixe 6. On reviendra sur cet aspect dans la suite.

Le guide mobile 5 est solidaire d'une patte d'accrochage 50, ayant la forme d'un U dont les branches sont de longueurs inégales. La branche la plus longue de la patte d'accrochage 50 est solidaire d'un chariot mobile 54. Le chariot mobile 54 est monté sur un rail fixe 53. Le rail fixe 53 comporte deux perçages 530.

En consultant les figures 2 ou 6, on voit que le rail fixe 53 est monté sur un bâti 7, par deux vis non représentées et passant au travers des perçages 530. Le chariot mobile 54 coulisse sur le rail fixe 53. Un support 540 est monté à l'une des extrémités du rail fixe 53 et fait protubérance pour passer au travers d'une lumière 531 aménagée dans la plus longue des deux branches de la patte de montage 50. Ce support 540 comporte un perçage taraudé dans lequel est montée une vis de réglage 58 comportant une tête 580. La tête 580 de la vis de réglage 68, dépassant de la patte de montage du guide mobile 5, forme une butée limitant le mouvement du chariot mobile 54, et donc du guide mobile 5. Un ressort de rappel 55 est inséré entre le support 540 et la patte d'accrochage 50. Ce ressort tend en permanence à repousser (vers le haut à la figure 1) le guide mobile 5. Le ressort de rappel 55 a tendance à repousser donc la patte d'accrochage 50 contre la tête 580 de la vis de réglage 58.

Tout à l'extrémité de la patte d'accrochage 50, un galet 56 est monté à rotation libre. Ce galet 56 est destiné à coopérer avec une came 57 montée sur un arbre. On voit l'axe de rotation 57R de la came 57, représenté à la figure 1 et à la figure 6. L'axe de rotation 57R est bien entendu animé d'un mouvement synchronisé avec le système d'animation de l'organe de dépose 3. La came 57 comporte une piste haute 57H et une piste basse 57B. Lorsque le galet 56 roule sur la piste basse 57B, la patte d'accrochage 50 est repoussée vers le bas en comprimant le ressort de rappel 55. Le guide mobile 5 prend une position basse et s'escamote à l'arrière du guide fixe 6. Lorsque le galet 56 est en regard de la piste haute 57H, la patte d'accrochage 50 est repoussée vers le haut sous l'action du ressort de rappel 55. Cette course est limitée par la position de la vis de réglage 58, ce qui fait qu'à ce moment, le galet 56 ne roule pas nécessairement sur la piste haute 57H. Il peut subsister un jeu entre le galet 56 et la piste haute 57H. Le positionnement du guide mobile 5 est imposé par la vis de réglage 58. Ce système à came et à galet destiné à suivre le profil de la came n'est qu'une des multiples façons de commander le mouvement du guide mobile 5. On pourrait envisager de nombreuses autres commandes, mécaniques ou électriques.

On voit que le guide fixe 6 comporte une patte d'accrochage 60. La patte d'accrochage 60 comporte une lumière 600. En consultant la figure 6, on voit que la patte d'accrochage 60 est montée sur le bâti 7 au moyen d'une vis 63, passant au travers de la lumière 600 visible à la figure 1. La lumière 600 est allongée afin de permettre un réglage du positionnement du guide fixe 6.

L'application illustrant l'invention vise à fabriquer une carcasse radiale. Il s'agit donc d'ancrer des arceaux dans chaque bourrelet du futur pneumatique, et il s'agit de réaliser une dépose aussi précise que possible dans les flancs du futur pneumatique. Le guide mobile 5 comporte essentiellement une lame courbée 52 pour épouser l'allure du flanc de la forme 1 (ici, la forme 1 est un noyau rigide en aluminium, segmenté pour pouvoir être démonté et extrait d'un pneumatique après vulcanisation de celui-ci). La lame courbée 52 du guide mobile comporte un bord 51 destiné à entrer en contact de guidage avec le fil. Ledit guide mobile 5 est interposé entre le trajet de l'organe de dépose 3 et la forme 1. Ledit guide mobile 5 est installé en regard de l'un des points d'inversion du mouvement de l'organe de dépose 3 et au moins une partie du trajet de l'organe de dépose 3.

Il en est de même pour le guide fixe 6. Le guide fixe 6 comporte essentiellement une lame courbée 62 parallèlement à lame courbée 52. La lame courbée 62 du guide fixe comporte un bord 61 destiné à entrer en contact de guidage avec le fil. Ledit guide fixe 6 est interposé entre le trajet de l'organe de dépose 3 et la forme 1. Ledit guide fixe 6 est installé en regard de l'un des points d'inversion du mouvement de l'organe de dépose 3 et au moins une partie du trajet de l'organe de dépose 3.

En fait, les guides mobile et fixe sont tout deux disposés entre le trajet de l'organe de dépose 3 et trajectoire du fil 4 à la surface de la forme 1 après dépose.

On voit sur les dessins que le guide fixe 6 est plus proche de la forme 1 que le guide mobile 5. Il s'agit là d'un choix arbitraire de construction. On pourrait tout aussi bien inverser les positions relatives des guides mobile 5 et fixe 6 par rapport à la forme 1. A titre purement illustratif, notons par exemple que le guide fixe est à environ 2 à 5 mm de la surface libre de la forme 1 sur laquelle on dépose le fil 4 pour une configuration permettant la fabrication de pneumatiques pour véhicules de tourisme, qu'il serait à environ 5 à 10 mm de la surface libre de la forme 1 sur laquelle on dépose le fil 4 pour une configuration permettant la fabrication de pneumatiques pour véhicules poids lourds, et que l'on prévoit au moins 1mm de jeu entre les guides mobile et fixe.

Les figures 1, 2, 3a à 3e, 4, 5 et 9 illustrent des guides mobile et fixe associés avec une ½ forme, guidant le fil dans un flanc entre le bourrelet et l'extrémité latérale de la zone de la bande de roulement. Le bord de contact 51 du guide mobile comporte un segment s'inscrivant dans un plan (cet aspect est un cas particulier, non limitatif) et, du côté proche de l'épaule du pneumatique, une extrémité 510 s'éloignant progressivement de ce plan. De même, le bord de contact 61 du guide fixe comporte un segment s'inscrivant dans un plan et, du côté proche de l'épaule du pneumatique, une extrémité 610 s'éloignant progressivement de ce plan.

En outre, le bord de contact 51 du guide mobile comporte un segment s'inscrivant dans un plan et, du côté proche du bourrelet du pneumatique, une extrémité 511 s'éloignant progressivement de ce plan. De même, le bord de contact 61 du guide fixe comporte un segment s'inscrivant dans un plan et, du côté proche du bourrelet du pneumatique, une extrémité 611 s'éloignant progressivement de ce plan.

Expliquons maintenant le fonctionnement de l'invention.

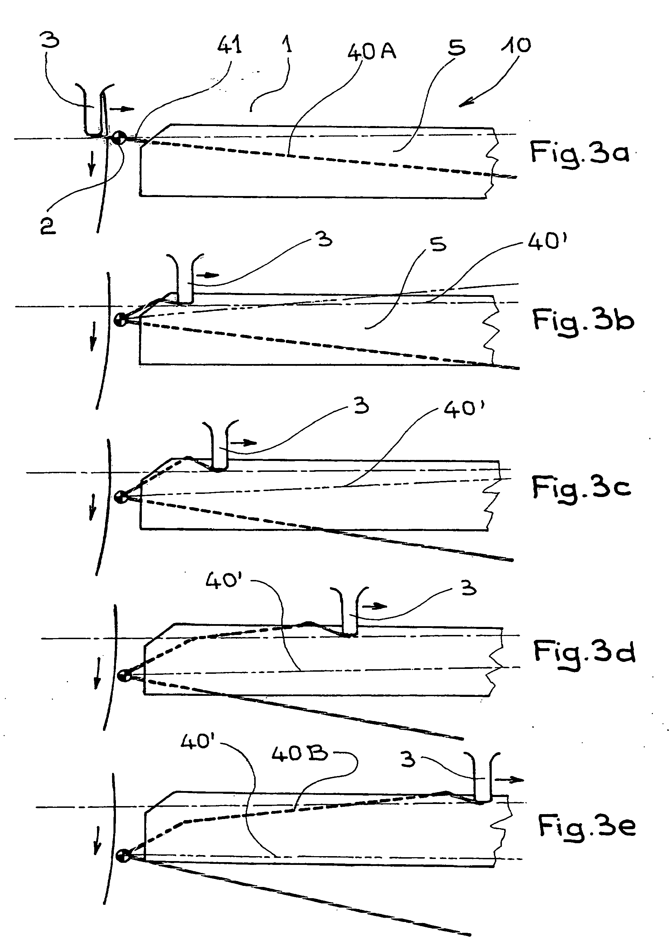

Aux figures 3a à 3e, on voit partiellement le guide mobile 5 avec, en arrière plan, une forme 1, entraînée en rotation dans le sens identifié par une flèche pointant vers le bas, à gauche de chacune des figures. A la figure 3a, on voit l'organe de dépose 3 parvenu au point d'inversion de son mouvement. Un dispositif presseur 2 plaque le fil contre la forme, juste en aval de l'organe de dépose 3. On voit une portion 40A, que l'intervention du dispositif presseur 2 a au moins en partie fait coller sur la couche de caoutchouc 10 dont est revêtue la forme 1. Après intervention du dispositif presseur 2, le l'organe de dépose 3 décrit un mouvement dans la direction de la flèche horizontale adjacente à l'organe de dépose 3 à la figure 3a. On voit en consultant la série des figures 3a à 3e que le guide mobile 5 écarte le fil de la position qu'il prendrait naturellement entre le dispositif presseur 2 et l'organe de dépose 3 s'il n'y avait pas le guide mobile. Grâce à cela, de part et d'autre de la boucle que forme le fil dans la zone 41 du bourrelet, les tronçons adjacents sont suffisamment écartés l'un de l'autre. On voit à la figure 3e une portion 40B bien écartée de la portion 40A avant d'être collée sur la forme 1.

Les figures 4 et 5 permettent d'observer plus globalement la dépose du fil sur la forme 1. A la figure 4, on voit que la forme 1 est mise en rotation dans le sens illustré par la flèche. On repère le guide mobile 5 et le guide fixe 6. On voit également l'organe de dépose 3, en aval duquel on aperçoit une portion 40A du fil 4. En amont de l'organe de dépose 3, le fil 4 rejoint un distributeur de fil (non représenté). La portion 40A est en contact avec le guide fixe 6. Il est souhaitable que les arceaux de la carcasse radiale d'un pneumatique soient disposés dans un plan radial. Appelons ce plan radial le plan π_{R} de référence. Le système d'animation de l'organe de dépose 3 fait décrire à celui-ci un trajet compris dans un plan. Pendant ce mouvement, la forme 1 est en rotation dans le sens indiqué. Le bord 61 de contact du guide fixe 6 est donc incliné par rapport au plan π_{R} de référence de façon à ce que, compte tenu de la rotation de la forme 1 pendant le mouvement de l'organe de dépose 3 et compte tenu du fait que le point où il y a contact entre le fil 4 et le guide fixe 6 se déplace le long du bord 61, la portion 40A de fil 4 soit finalement déposé sur la forme 1 radialement (ou plus généralement selon la trajectoire désirée).

A la même figure 4, l'organe de dépose 3 est à l'extrémité du mouvement de va-et-vient qu'il décrit autour de la forme 1. On sait que c'est à ce moment que va intervenir un presseur (non représenté à la figure 4) permettant de créer une boucle et de l'appliquer contre la forme 1.

A la figure 5, on voit que le fil 4 a été ancré contre la forme 1 au moyen du presseur 2 dans une zone correspondant au bourrelet du futur pneumatique. Le mouvement de l'organe de dépose 3 dans le sens de la flèche radiale entraîne le dévidage du fil 4 dont on voit une portion 42 s'étendant entre l'organe de dépose 3 et la forme 1. Pendant la poursuite du mouvement de l'organe de dépose 3, le fil 4 frotte tout le long du bord 51 du guide mobile 5. On voit que le guide mobile 5 a été déplacé circonférentiellement dans le sens inverse à celui de la rotation de la forme 1, afin de contraindre la portion 40B à former l'écart souhaité avec la portion 40A qui a été collée contre la forme dans la phase antérieure du mouvement de l'organe de dépose 3. Le bord 51 de contact du guide mobile 5 est incliné par rapport au plan π_{R} de référence, de façon à ce que, compte tenu de la rotation de la forme 1 continue, à vitesse constante, pendant le mouvement de l'organe de dépose 3, la portion 40B de fil 4 soit déposé sur la forme 1 radialement (ou plus généralement selon la trajectoire désirée).

De la sorte, on comprend que, sans devoir imposer un mouvement saccadé d'indexation à la forme 1, on peut maîtriser correctement la trajectoire finale de dépose du fil 4 sur la forme 1, et le pas de pose. Bien entendu, la position exacte du guide mobile 5 peut varier à tout moment, ici selon la forme de la came.

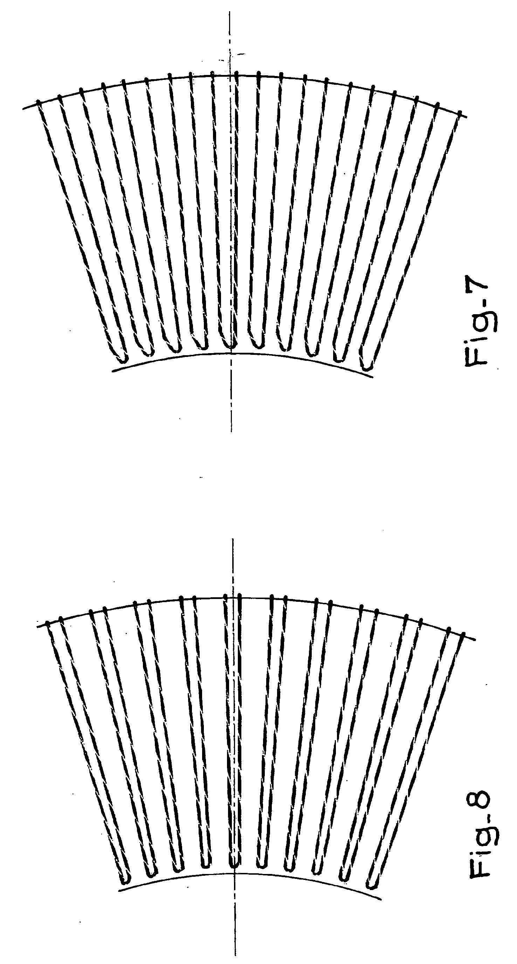

A la figure 8, on a visualisé l'allure des différents arceaux de fil 4 déposés sur la forme avec un système d'animation de l'organe de dépose donné, mais sans l'utilisation de l'organe de guidage selon l'invention. A la figure 7, on a représenté le résultat obtenu avec le même système d'animation de l'organe de dépose et avec l'intervention d'un guide fixe 6 et d'un guide mobile 5 selon l'invention. On voit qu'à la figure 7 l'écart entre les différents allers et retours du fil, c'est à dire l'écart entre les arceaux adjacents, est régulier et constant, alors qu'à la figure 8, les différents arceaux de fil 4 restent groupés deux par deux.

Ainsi, dans le cas où l'on utilise un guide fixe, il est disposé près du guide mobile, et on positionne ce guide fixe et on l'oriente de façon à ce que la trajectoire finale du fil 4 déposé lorsque la portion coopère avec le bord de ce guide fixe corresponde à ce que l'on souhaite sur la forme. Grâce à l'utilisation combinée d'un guide fixe correctement réglé et d'un guide mobile déplacé sur une course prédéterminée et lui-même positionné et orienté de façon correcte, on peut agir sur la trajectoire finale occupée par le fil sur la forme de façon à obtenir une grande précision de pose et une grande maîtrise du pas de pose et des écarts entre les fils de carcasse.

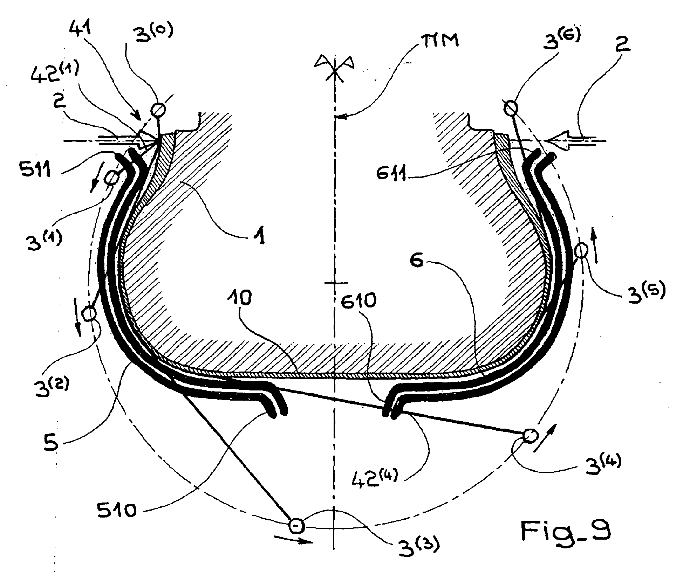

Ceci étant exposé, explicitons maintenant un avantage de la forme donnée aux extrémités 510, 610, 511 et 611. On consultera pour cela la figure 9. Il convient de lire cette figure en considérant d'abord la position 3⁽⁰⁾ de l'organe de dépose 3, au bourrelet de gauche à la figure 9. C'est le point d'inversion du sens du mouvement de l'organe de dépose 3. Le fil 4 ayant été ancré contre la forme 1 au moyen du presseur 2 dans la zone 41 correspondant au bourrelet du futur pneumatique, le mouvement de l'organe de dépose 3 dans le sens de la flèche représentée juste à côté de cet organe de dépose 3, entraîne le dévidage du fil 4 dont on voit une portion 42⁽¹⁾ s'étendant entre la position 3⁽¹⁾ de l'organe de dépose 3 et la forme 1. A ce moment, le fil 4 entre en contact avec l'extrémité 511 du bord 51 du guide mobile 5. On voit qu'il se présente au guide mobile 5 sensiblement perpendiculairement. La poursuite du mouvement de l'organe de dépose 3 l'amène vers les positions 3⁽²⁾, 3⁽³⁾, le fil 4 frottant le long du bord 51 du guide mobile 5. Parvenu à la position 3⁽⁴⁾, une portion 42⁽⁴⁾ s'étendant entre la position 3⁽⁴⁾ de l'organe de dépose 3 et la forme 1 entre en contact avec l'extrémité 610 du bord 61 du guide fixe 6. On voit que le fil se présente au guide fixe 6 sensiblement perpendiculairement. La poursuite du mouvement de l'organe de dépose 3 l'amène vers les positions 3⁽⁵⁾ puis 3⁽⁶⁾, le fil 4 frottant le long du bord 61 du guide fixe 6. Au retour, il y a inversion des rôles des guides mobile et fixe pour la dépose du fil dans chacun des deux flancs. Le mouvement de l'organe de dépose 3 dans le sens opposé aux flèches figurant sur la figure 9 entraîne aussi le dévidage du fil 4, qui frotte cette fois d'abord le long du bord 51 du guide mobile de droite à la figure 9, puis le long du guide fixe 6 de gauche, la forme de la came 57 étant telle que le guide mobile 5 de gauche s'est escamoté en retrait du guide fixe 6 adjacent.

Le choix de l'un ou l'autre des contacts du fil sur le guide mobile ou sur le guide fixe dépend de l'action que l'on veut avoir sur la trajectoire selon laquelle le fil 4 va être déposé et collé sur la forme 1.

Alors que l'on a jusqu'ici décrit des guides mobile et fixe associés chacun avec une demi forme, la figure 10 illustre une variante dans laquelle un guide mobile 5' allant d'un bourrelet à l'autre. Non seulement Il joue le rôle du guide mobile 5 décrit ci-dessus, mais il joue aussi le rôle du guide fixe décrit ci-dessus en continuant à guider le fil 4 également en coopération avec le mouvement de l'organe de dépose 3 lorsqu'il va de l'épaule au bourrelet en regard d'un flanc. Le guide mobile 5' est monté par des axes sur des pattes 50' en regard de chacun des flancs de la forme 1. Les pattes 50' sont animées d'un mouvement approprié pour déplacer le guide mobile 5' circonférentiellement par rapport à la forme 1, afin d'infléchir la trajectoire de dépose du fil 4 sur la forme 1.

Différentes autres variations sont possibles sans sortir du cadre de la présente invention. Par exemple, comme déjà signalé dans la demande de brevet EP 0 580 055 précitée, on peut réaliser un renforcement de carcasse, dans lequel le pas de pose du fil est variable. On entend par "pas de pose" la distance résultant de la somme de l'écart entre deux fils adjacents et le diamètre du fil. Il est bien connu que pour un renforcement de carcasse, l'écart entre fils varie selon le rayon auquel on le mesure. Il n'est pas question ici de cette variation, mais bien d'un pas variable à un rayon donné. Il suffit pour cela de, sans changer la cadence de travail des organes de pose du fil (système d'animation et presseurs), faire varier selon toute loi appropriée la vitesse de rotation de la forme, et de commander le guide mobile de façon appropriée. On peut par exemple commander la position de la butée 580 par un moteur pas à pas. On obtient ainsi un pneumatique dont les fils de carcasse, par exemple pour une carcasse radiale, sont disposés selon un pas présentant une variation contrôlée pour une position radiale donnée.

L'invention s'étend aussi à un procédé de fabrication d'un renforcement pour pneumatique, à partir d'un fil délivré en continu et à la demande par un distributeur de fil approprié, utilisant une forme de révolution ayant un axe de rotation et sur laquelle on construit progressivement ledit renforcement, comprenant une étape permettant de déposer sur la forme une couche de caoutchouc cru au moins dans les zones d'ancrage d'extrémités dudit renforcement, et dans lequel on anime la forme d'une rotation à vitesse toujours non nulle et, le fil étant retenu sur la forme dans une zone d'ancrage, en synchronisme avec la rotation de la forme, on fait décrire à un organe de dépose dans lequel le fil est enfilé, un mouvement alterné de va-et-vient autour de la forme de façon à poser progressivement un tronçon pendant le mouvement aller de l'organe de dépose et un tronçon pendant le mouvement retour, les extrémités de chaque tronçon étant temporairement pressées contre la forme dans lesdites zones d'ancrage, et pendant que l'organe de dépose exécute son mouvement alterné, on actionne un guide mobile de façon à déplacer circonférentiellement une portion du fil se disposant entre l'organe de dépose et la forme afin d'infléchir la trajectoire finale que font les tronçons une fois déposés sur ladite forme, et on répète les mouvements indiqués ci-dessus jusqu'à déposer le nombre voulu de tronçons à la surface de la forme, selon la trajectoire souhaitée pour le fil à la surface de la forme.

De préférence, au moyen d'un presseur approprié, on forme une boucle avec le fil et on plaque la boucle contre la forme à chaque extrémité de la trajectoire finale. De préférence également, la vitesse de rotation de la forme est constante, et on déplace circonférentiellement une portion du fil se disposant entre l'organe de dépose et la forme afin d'obtenir une trajectoire finale des tronçons, une fois déposés sur une forme toroïdale, formant un angle constant par rapport au plan médian.

## Revendications

1. Appareil de fabrication d'un renforcement pour pneumatique, ledit appareil étant destiné à fabriquer un renforcement constitué à partir d'un fil (4) délivré en continu et à la demande par un distributeur approprié, ledit appareil étant destiné à être utilisé en coopération avec une forme (1) de révolution sur laquelle on construit progressivement ledit renforcement en déposant des tronçons dudit fil selon une trajectoire souhaitée pour ledit fil à la surface de ladite forme, ledit appareil comprenant :
• un organe de dépose (3) du fil (4) sur la surface de la forme (1), décrivant un trajet alterné entre deux points d'inversion de mouvement,
• des presseurs (2) proches de chaque point d'inversion de mouvement, pour appliquer le fil sur la forme auxdites extrémités, agissant en synchronisme avec ledit organe de dépose (3),
**caractérisé en ce qu'**il comporte :
• au moins un guide mobile (5), disposé en regard de ladite forme, dans l'espace situé entre ladite forme et le trajet décrit par ledit organe de dépose (3),
• des moyens de commande pour déplacer circonférentiellement ledit guide mobile (5),
• des moyens de motorisation pour piloter en synchronisme l'organe de dépose (3), les presseurs (2) et les moyens de commande du guide mobile (5).

2. Appareil selon la revendication 1, dans lequel ledit guide mobile (5) est installé en regard de l'un des points d'inversion du mouvement de l'organe de dépose (3) et au moins une partie du trajet de l'organe de dépose (3).

3. Appareil selon la revendication 1 ou 2, comportant en outre un guide fixe (6) sensiblement parallèle au guide mobile (5).

4. Appareil selon l'une des revendications 1 à 3, dans lequel les moyens de commande comporte une came (57), le guide mobile (5) étant solidaire d'une patte d'accrochage (50) sur laquelle est monté un galet (56) destiné à suivre le profil de la came (57).

5. Appareil selon l'une des revendications 1 à 4, destiné à être utilisé avec une forme sensiblement toroïdale, dans lequel le guide mobile (5) comporte essentiellement une lame courbée (52) pour épouser l'allure du flanc de la forme (1), ladite lame comportant un bord (51) destiné à entrer en contact de guidage avec le fil.

6. Appareil selon la revendication 3, destiné à être utilisé avec une forme sensiblement toroïdale, dans lequel le guide mobile (5) comporte essentiellement une lame courbée (52) pour épouser l'allure du flanc de la forme (1), ladite lame du guide mobile comportant un bord (51) destiné à entrer en contact de guidage avec le fil, et dans lequel le guide fixe (6) comporte essentiellement une lame courbée (62) parallèlement à lame courbée (52) du guide mobile.

7. Appareil selon la revendication 5, dans lequel le bord de contact (51) du guide mobile comporte un segment s'inscrivant dans un plan, et une extrémité (510) s'éloignant progressivement de ce plan.

8. Appareil selon la revendication 6, dans lequel le bord de contact (61) du guide fixe comporte un segment s'inscrivant dans un plan, et une extrémité (610) s'éloignant progressivement de ce plan.

9. Procédé de fabrication d'un renforcement pour pneumatique, à partir d'un fil (4) délivré en continu et à la demande par un distributeur de fil approprié, utilisant une forme (1) de révolution ayant un axe de rotation et sur laquelle on construit progressivement ledit renforcement, comprenant une étape permettant de déposer sur la forme une couche de caoutchouc cru au moins dans les zones d'ancrage d'extrémités dudit renforcement, et dans lequel on anime la forme d'une rotation à vitesse toujours non nulle et, le fil étant retenu sur la forme dans une zone d'ancrage, en synchronisme avec la rotation de la forme, on fait décrire à un organe de dépose (3) dans lequel le fil est enfilé, un mouvement alterné de va-et-vient autour de la forme de façon à poser progressivement un tronçon pendant le mouvement aller de l'organe de dépose et un tronçon pendant le mouvement retour, les extrémités de chaque tronçon étant temporairement pressées contre la forme dans lesdites zones d'ancrage, et pendant que l'organe de dépose exécute son mouvement alterné, on actionne un guide mobile (5) de façon à déplacer circonférentiellement une portion du fil se disposant entre l'organe de dépose et la forme afin d'infléchir la trajectoire finale que font les tronçons une fois déposés sur ladite forme, et on répète les mouvements indiqués ci-dessus jusqu'à déposer le nombre voulu de tronçons à la surface de la forme, selon la trajectoire souhaitée pour le fil à la surface de la forme.

10. Procédé selon la revendication 9 dans lequel, au moyen d'un presseur approprié, on forme une boucle avec le fil et on plaque la boucle contre la forme à chaque extrémité de la trajectoire finale.

11. Procédé selon l'une des revendications 9 ou 10, dans lequel ladite forme est sensiblement toroïdale et la vitesse de rotation de la forme est constante, et dans lequel on déplace circonférentiellement une portion du fil se disposant entre l'organe de dépose et la forme afin d'obtenir une trajectoire finale des tronçons, une fois déposés sur ladite forme, formant un angle constant par rapport au plan médian.

## Claims

1. Apparatus for manufacturing a tyre reinforcement, the apparatus being intended to manufacture a reinforcement formed from a cord (4) supplied continuously and on demand by a suitable distributor, the apparatus being intended to be used in cooperation with a revolving form (1) on which the reinforcement is built up progressively by the deposition of sections of cord along a desired trajectory for the cord on the surface of the form, the apparatus comprising:
• an element (3) for depositing cord (4) on the surface of the form (1), describing an alternating path between two turning points,
• pressers (2) close to each turning point in order to apply the cord to the form at the aforementioned ends, acting synchronously with the depositing element (3),
**characterised in that** it comprises:
• at least one mobile guide (5), disposed opposite the form, in the space between the form and the path described by the depositing element (3),
• control means for moving the mobile guide (5) around the circumference,
• motorisation means in order to pilot the depositing element (3), the pressers (2) and the control means of the mobile guide (5) in synchronisation.

2. Apparatus according to claim 1, wherein the mobile guide (5) is installed opposite one of the turning points of the depositing element (3) and at least part of the path of the depositing element (3).

3. Apparatus according to claim 1 or 2, furthermore comprising a fixed guide (6) substantially parallel to the mobile guide (5).

4. Apparatus according to one of claims 1 to 3, wherein the control means comprise a cam (57), the mobile guide (5) being rigidly connected to a catch hook (50) on which is mounted a roller (56) intended to follow the profile of the cam (57).

5. Apparatus according to one of claims 1 to 4, intended to be used with a substantially toroidal form, wherein the mobile guide (5) essentially comprises a curved blade (52) in order to mate with the contour of the side of the form (1), the blade comprising an edge (51) intended to come into guiding contact with the cord.

6. Apparatus according to claim 3, intended to be used with a substantially toroidal form, wherein the mobile guide (5) essentially comprises a curved blade (52) in order to mate with the contour of the side of the form (1), the blade of the mobile guide comprising an edge (51) intended to come into guiding contact with the cord, and wherein the fixed guide (6) essentially comprises a curved blade (62) parallel to the curved blade (52) of the mobile guide.

7. Apparatus according to claim 5, wherein the contact edge (51) of the mobile guide comprises a segment inscribed in one plane and an end (510) extending progressively from this plane.

8. Apparatus according to claim 6, wherein the contact edge (61) of the fixed guide comprises a segment inscribed in one plane and an end (610) extending progressively from this plane.

9. Method of manufacturing a tyre reinforcement from a cord (4) supplied continuously and on demand by a suitable cord distributor, using a revolving form (1) having an axis of rotation and on which the reinforcement is progressively built up, comprising a stage for depositing on the form a layer of raw rubber at least in the zones where the ends of the reinforcement are anchored, and in which the form is driven in rotation at a speed that is always non-zero, the cord being held on the form in an anchoring zone synchronously with rotation of the form, and wherein a depositing element (3) in which the cord is threaded is made to describe a reciprocating motion about the form in order to deposit progressively a section during the outward movement of the depositing element and a section during the return motion, the ends of each section being temporarily pressed against the form in the anchoring zones, and while the depositing element performs its alternating movement, a mobile guide (5) is so acted on as to move, in a circumferential direction, a portion of the cord disposed between the depositing element and the form, in order to adapt the final trajectory made by the sections once deposited on the form, and the above-indicated movements are repeated until the desired number of sections are deposited on the surface of the form, along the desired trajectory for the cord on the surface of the form.

10. Method according to claim 9, wherein by means of a suitable presser, a loop is formed with the cord and the loop is flattened against the form at each end of the final trajectory.q

11. Method according to either of claims 9 or 10, wherein the form is substantially toroidal and the speed of rotation of the form is constant, and wherein a portion of the cord located between the depositing element and the form is moved circumferentially in order to obtain a final trajectory of the sections, once deposited on the form, forming a constant angle relative to the median plane.

## Patentansprüche

1. Vorrichtung zum Herstellen einer Verstärkung für Luftreifen, wobei die Vorrichtung dazu vorgesehen ist, eine Verstärkung herzustellen, die aus einer Faser (4) gebildet ist, die ununterbrochen und auf Anforderung von einem geeigneten Verteiler geliefert wird, wobei die Vorrichtung dazu vorgesehen ist, in Kooperation mit einer rotationssymmetrischen Form (1) verwendet zu werden, auf der progressiv die Verstärkung konstruiert wird, indem Teilstücke der Faser längs einer gewünschten Bahn für die Faser auf die Oberfläche der Form aufgebracht werden, wobei die Vorrichtung enthält:
- ein Aufbringorgan (3) für die Faser (4) auf der Oberfläche der Form (1), das eine zwischen zwei Bewegungsumkehrpunkten wechselnde Bahn beschreibt,
- Presseinrichtungen (2), die sich in der Nähe jedes Bewegungsumkehrpunkts befinden, um die Faser auf der Form gegen die Enden zu pressen, wobei sie synchron mit dem Aufbringorgan (3) wirken,
**dadurch gekennzeichnet, dass** sie enthält:
- wenigstens eine bewegliche Führung (5), die gegenüber der Form in dem Zwischenraum, der sich zwischen der Form und der von dem Aufbringorgan (3) beschriebenen Bahn befindet, angeordnet ist,
- Steuermittel, um die bewegliche Führung (5) in Umfangsrichtung zu verlagern,
- Antriebsmittel, um das Aufbringorgan (3), die Presseinrichtungen (2) und die Steuermittel für die bewegliche Führung (5) synchron zu steuern.

2. Vorrichtung nach Anspruch 1, wobei die bewegliche Führung (5) gegenüber einem der Bewegungsumkehrpunkte des Aufbringorgans (3) und gegenüber wenigstens einem Teil der Bahn des Aufbringorgans (3) installiert ist.

3. Vorrichtung nach Anspruch 1 oder 2, die außerdem eine feste Führung (6) enthält, die zu der beweglichen Führung (5) im Wesentlichen parallel ist.

4. Vorrichtung nach einem der Ansprüche 1 bis 3, in der die Steuermittel einen Nocken (57) enthalten, wobei die bewegliche Führung (5) mit einem Mitnehmeransatz (50) fest verbunden ist, an dem eine Rolle (56) montiert ist, die dazu vorgesehen ist, der Nockenkurve (57) zu folgen.

5. Vorrichtung nach einem der Ansprüche 1 bis 4, die dazu vorgesehen ist, mit einer im Wesentlichen toroidförmigen Form verwendet zu werden, wobei die bewegliche Führung (5) im Wesentlichen ein gekrümmtes Plättchen (52) aufweist, das sich an den Verlauf der Seitenfläche der Form (1) anschmiegt, wobei das Plättchen einen Rand (51) aufweist, der dazu vorgesehen ist, mit der Faser in einen Führungskontakt zu treten.

6. Vorrichtung nach Anspruch 3, die dazu vorgesehen ist, mit einer im Wesentlichen toroidförmigen Form verwendet zu werden, wobei die bewegliche Führung (5) im Wesentlichen ein gekrümmtes Plättchen (52) aufweist, das sich an den Verlauf der Seitenfläche der Form (1) anschmiegt, wobei das Plättchen der beweglichen Führung einen Rand (51) aufweist, der dazu vorgesehen ist, mit der Faser in einen Führungskontakt zu treten, wobei die feste Führung (6) im Wesentlichen ein gekrümmtes Plättchen (62) aufweist, das zu dem gekrümmten Plättchen (52) der beweglichen Führung parallel ist.

7. Vorrichtung nach Anspruch 5, wobei der Kontaktrand (51) der beweglichen Führung ein Segment aufweist, das in eine Ebene eingeschrieben ist, und ein Ende (510) aufweist, das sich von dieser Ebene progressiv entfernt.

8. Vorrichtung nach Anspruch 6, wobei der Kontaktrand (61) der festen Führung ein Segment aufweist, das in eine Ebene eingeschrieben ist, und ein Ende (610) aufweist, das sich von dieser Ebene progressiv entfernt.

9. Verfahren zum Herstellen einer Verstärkung für Luftreifen ausgehend von einer Faser (4), die ununterbrochen und auf Anforderung von einem geeigneten Faserverteiler geliefert wird, das eine rotationssymmetrische Form (1) verwendet, die eine Drehachse besitzt und auf der die Verstärkung progressiv konstruiert wird, mit einem Schritt, der ermöglicht, auf der Form eine Rohkautschukschicht wenigstens in den Endverankerungszonen der Verstärkung aufzubringen, und in dem die Form zu einer Drehung mit einer stets von Null verschiedenen Geschwindigkeit angetrieben wird, wobei die Faser auf der Form in einer Verankerungszone gehalten wird, wobei bewirkt wird, dass ein Aufbringorgan (3), in dem die Faser aufgewickelt ist, synchron mit der Drehung der Form eine Bewegung beschreibt, die um die Form hin und her wechselt, derart, dass während der Hinbewegung des Aufbringorgans ein Teilstück progressiv abgelegt wird und während der Rückbewegung ein Teilstück abgelegt wird, wobei die Enden jedes Teilstücks in den Verankerungszonen vorübergehend gegen die Form gepresst werden, wobei in der Phase, in der das Aufbringorgan seine hin und her gehende Bewegung ausführt, eine bewegliche Führung (5) betätigt wird, derart, dass ein Abschnitt der Faser, der sich zwischen dem Aufbringorgan und der Faser befindet, in Umfangsrichtung verlagert wird, um die endgültige Bahn, die die einmal aufgebrachten Teilstücke auf der Form bilden, einzuknicken, wobei die oben angegebenen Bewegungen wiederholt werden, bis die gewünschte Anzahl von Teilstücken auf die Oberfläche der Form längs der für die Faser gewünschten Bahn auf der Oberfläche der Form aufgebracht ist.

10. Verfahren nach Anspruch 9, wobei mit einem geeigneten Pressmittel mit der Faser eine Schleife gebildet wird und die Schleife an jedem Ende der endgültigen Bahn gegen die Form gedrückt wird.

11. Verfahren nach einem der Ansprüche 9 oder 10, wobei die Form im Wesentlichen toroidförmig ist und die Drehgeschwindigkeit der Form konstant ist und wobei ein Abschnitt der Faser, der sich zwischen dem Aufbringorgan und der Form befindet, in Umfangsrichtung verlagert wird, um eine endgültige Bahn von Teilstücken zu erhalten, die, sobald sie auf die Form aufgebracht sind, in Bezug auf eine Medianebene einen konstanten Winkel bilden.
